# EUROPEAN PATENT SPECIFICATION

(11) **EP 1 554 076 B1**
(45) Date of publication and mention of the grant of the patent: **13.02.2008**
(21) Application number: 03747846.8
(22) Date of filing: 30.09.2003
(51) Int. Cl.: B23K 1/008, B23K 37/04

(54) **A METHOD AND A MEANS FOR THE FIXATION OF OBJECTS**
VERFAHREN UND MITTEL ZUR BEFESTIGUNG VON OBJEKTEN
PROCEDE ET MOYENS DE FIXATION D'OBJETS

(30) Priority: 10.10.2002 DK 200201528
(43) Date of publication of application: 20.07.2005
(73) Proprietor: Bodycote Varmebehandling A/S, 2730 Herlev (DK)
(72) Inventor: GUNDEL, Peter, H., DK-3520 Farum (DK); BANG, Arne, DK-3600 Frederikssund (DK)
(74) Representative: Larsen, Hans Ole
(86) International application number: PCT/DK2003/000644
(87) International publication number: WO 2004/033140

(56) References cited:
- EP-A- 0 492 912
- EP-A- 0 577 309
- US-A- 5 549 238

## Description

The invention relates to a method for the fixation of objects which, preferably in a stacked form, are to be temperature-soldered in a furnace in vacuum or protective gas and a fixture element according to, respectively, the preamble of claims 1 and 2 (see, for example, US-A-5 549 238).

High temperature heat treatment takes place in closed furnaces at temperatures above 1000 °C. Heat treatment is used inter alia for so-called vacuum soldering, which is a hard-soldering of metals, such as stainless steel, and where the hard solder is preferably an alloy of silver and copper or optionally a pure metal having a lower melting point than the object to be soldered.

This hard-soldering preferably takes place in vacuum or protective gas to ensure that the hard solder, the melt, does not absorb oxygen, nitrogen or hydrogen from the atmosphere or water vapour. This results in a perfect hard-soldering of great strength and tightness.

The metals become soft at this high temperature, and the objects must therefore be supported and optionally separated by means of a fixture, which prevents contamination of the objects and ensures that the parts are insulated from each other and from the solder.

Graphite elements are used for this purpose, which have the property that the material maintains its carrying capacity at the high temperatures. To insulate the objects from steel and solder, it is known to use a ceramic web or to apply a ceramic powder with binder.

This fixture, however, is not very suitable, as it has a poor durability. The ceramic material is rapidly decomposed in the handling and must therefore be replaced frequently. Thus, the graphite is not insulated effectively and completely, and the risk of contamination with carbon is therefore high. To this should be added the danger of soldering where this insulation is defective and fails.

Decomposition of the ceramic web, cloth, causes the ceramic fibres to be released to the surroundings to a greater or smaller extent, which involves problems for the working environment as well as the risk of extraordinary wear on the plant and particularly its vacuum pumps.

Correspondingly, applied ceramic powder, when being decomposed, will release ceramic dust involving similar problems.

Finally, it is known to use a fixture of steel in the form of plate elements or rods, but since the steel has a poor strength at the high temperatures, no sufficient support is achieved for the treated objects, just as these fixtures are deformed in use.

### Object of the invention

The object of the invention is to remedy these defects and drawbacks, and this is achieved by a method according to claim 1 where a fixture element is arranged between the elements, said fixture element comprising a metal plate shell in which a graphite body is embedded, wherein the plate shell is made of stainless steel having an Al content greater than 2 percent by weight or a titanium content greater than 0.4 percent by weight, said plate being oxidized by heating in air at a temperature above 1100 degrees.

In this surprisingly simple manner, first and foremost easy handling of the fixture and the objects in the stacking and destacking of the stacked objects to be heat-treated, is achieved.

Also, the fixture does not cause generation of dust, thereby ensuring a clean working environment and a long service life of the vacuum pumps, etc. Finally, the fixture has an unusually long service life, and a good support is achieved owing to the strength of the fixture even at the high temperatures.

The invention relates as well to a fixture element according to claim 2, which comprises a metal plate shell in which a graphite body is embedded, wherein the plate shell is made of stainless steel having an Al contend greater than 2 percent by weight or a titanium content greater than 0.4 percent by weight, said plate being oxidized by heating in air at a temperature above 1100 degrees C, By these features an effective insulation from the objects, solder and support grates is achieved.

When, as stated in claim 3, the fixture element is composed of two plate members with the graphite body therebetween, a good durability is achieved, since the individual elements are separated and can therefore move independently of each other.

When, as stated in claim 4, the plate members are formed by two joined plate members, no smudging of aluminium from the fixture to the object can take place, and a completely plane surface may be achieved, where the outer plate constitutes the surface.

When, as stated in claim 5, the element is configured such that it is adapted to the objects which are to be heat-treated, the plates may cover optional individual parts which are therefore insulated effectively.

When, as stated in claim 6, the parts are held together by through-going connecting elements, it is more easy to handle the fixture.

When, as stated in claim 7, the graphite body is provided with a recess around the connecting element, the mutually independent movability of the parts is ensured.

When, as stated in claim 8, the plates are provided with a depression, the connecting elements may be flush-mounted to give a plane upper side and/or lower side.

Finally, it is expedient, as stated in claim 9, to use such fixture elements in connection with stacking and heat treatment of objects, such as heat exchangers.

### The drawing

An example of the method, the fixture element and the use according to the invention will be described more fully below with reference to the drawing, in which
- fig. 1: shows a fixture element, seen in perspective,
- fig. 2: shows a sectional view of the fixture element, seen in the direction II-II in fig. 1,
- fig. 3: shows a sectional view of the joint III in fig. 2 with a connecting element on an enlarged scale, and
- fig. 4: shows a sectional view of a sep-up of objects with a fixture element mounted,
- fig. 5: shows a sectional view of a configuration of the fixture element where the plate member is formed by two joined plate members,
- fig. 6: shows an enlarged section of the joint VI in fig. 5.

### Description of the example

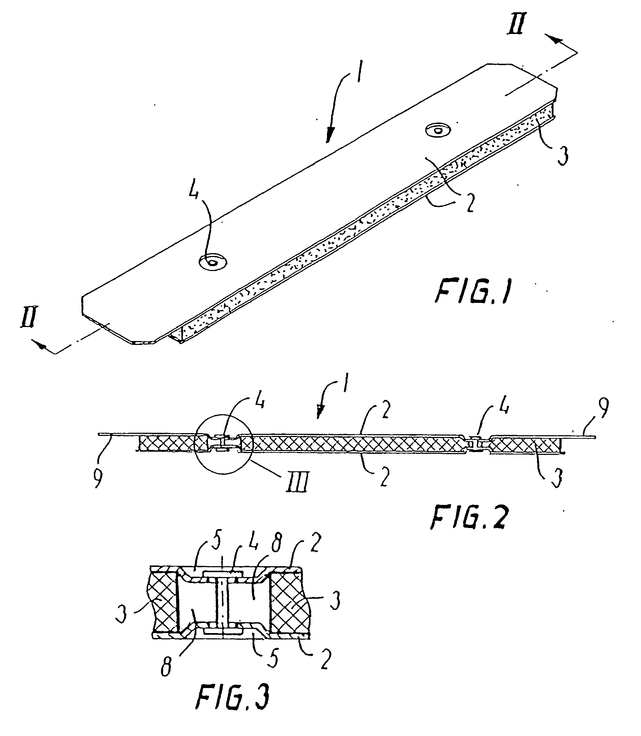

The fixture element 1, which is shown in figs. 1 and 2, comprises an upper and a lower plate member 2 with a graphite body 3 as a core.

As shown in fig. 3, there is also a connecting element 4 for connecting the plates 2 to the graphite core 3, which connecting element, in the example shown, is a kind of rivet whose heads are recessed into the plates 2 by means of a countersink, depression 5, in the plates 2. This ensures that the connecting element does not protrude from the plates, and that the fixture element has a plane upper side and lower side.

Owing to the mutual movability of the parts 2, 3 because of the different coefficients of expansion of the materials, a clearance 8 is provided for the connecting element 4 in the graphite body 3 in the form of a hole 8 around the rivet 4.

To achieve the desired insulation capacity and deformation resistance, the plates 2 are made of stainless steel with an alloy of more than 2 percent by weight of aluminium or with more than 0.4 percent by weight of titanium. The plates 2 are then oxidized by heating in air at a temperature which is higher than 1100 °C.

It has been found that when the fixture has been used for some time, smudging of aluminium from the fixture to the adjacent objects 6 may occur.

The smudging may conceivably be caused by a diffusion of carbon from the graphite core 3 into the plates 2. This results in displacement of the "equilibrium" between chromium oxide and aluminium oxide, whereby free aluminium will precipitate and thereby be capable of smudging.

This drawback may be remedied by means of a coating and/or barrier layer on the graphite core with e.g. nickel.

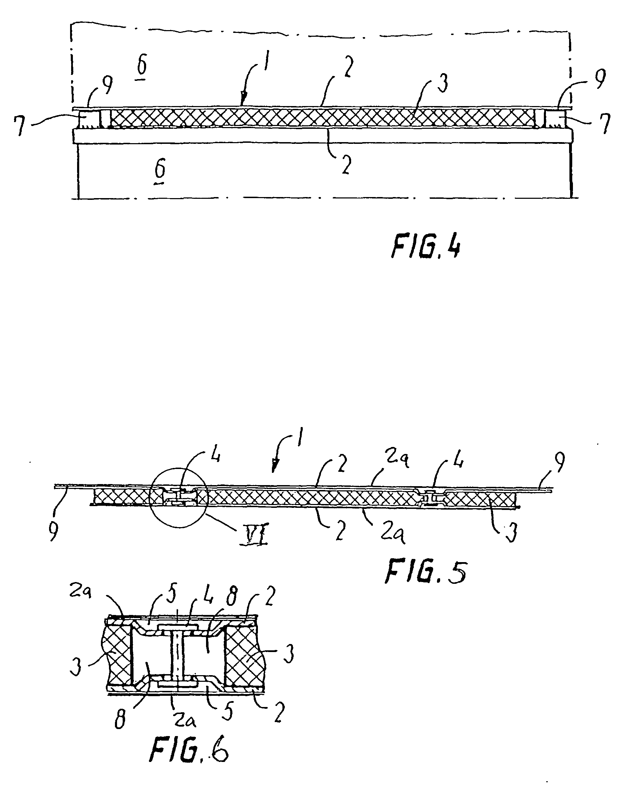

Another solution will be the use of two joined plates 2 and 2a, as indicated in figs. 5 and 6.

Hereby, the two plate layers constitute a barrier since the carbon will not easily "jump" from the inner plate 2 to the outer plate 2a. This barrier provides the additional advantage that the outer plate 2a may be spot-welded to the lower plate 2 after the mounting of the fixture, which will additionally allow creation of a plane outer side, since the plate 2a will cover the depressions 5 at the mounting place so that a completely plane side face is achieved, as indicated in figs. 5 and 6.

The shape and the dimension of the fixture element 1 are adapted to the objects 6 which are to be supported and heat-treated, as indicated in fig. 4.

The shown example involves heat exchanger parts which are provided with pipe stubs 7 at each side, which are to be vacuum-soldered at a high temperature to the heat exchanger part itself.

As will appear from fig. 4, the upper plate 2 is extended a distance 9 beyond the graphite core 3 to cover these pipe stubs 7. These are hereby insulated from the overlying object 6.

Further, the fixture element is dimensioned to fill the gap between the stacked elements 6 so as to achieve a good and stable support in the entire extent of the objects 6.

The objects are hereby maintained in their shape and kept free, i.e. insulated, from each other and the solder used.

The fixture element 1 has a high strength and deformation resistance, and since it is an assembled unit, it is easy to handle. To this should be added that there is no risk of contamination and thereby risk of bad working environment and undue wear on mechanical parts.

## Claims

1. A method for the fixation of objects which, preferably in a stacked form are to be temperature-soldered in a furnace in vacuum or protective gas,
**characterized in that** a fixture element (1) is arranged between the elements (6), said fixture element (1) comprising a metal plate shell (2) in which a graphite body (3) is embedded, wherein the plate shell (2) is made of stainless steel having an Al content greater than 2 percent by weight or a titanium content greater than 0.4 percent by weight, said plate shell (2) being oxidized by heating in air at a temperature above 1100 degrees C.

2. A fixture element (1) for use in a method according to claim 1, **characterized in that** the fixture element (1) comprises a metal plate shell (2) in which a graphite body (3) is embedded, wherein the plate shell (2) is made of stainless steel having an Al contend greater than 2 percent by weight or a titanium content greater than 0.4 percent by weight, said plate shell (2) being oxidized by heating in air at a temperature above 1100 degrees C.

3. A fixture element (1) according to claim 2, **characterized in that** the plate shell (2) is formed by two plate members (2) between which the graphite body (3) is embedded and so that the graphite body (3) essentially has the same extent as the plates (2).

4. A fixture element (1) according to claim 3, **characterized in that** the plate members (2) are formed by two joined plate members (2, 2a).

5. A fixture element (1) according to claims 3 and 4, **characterized in that** one or both of the plate members (2, 2a) are configured such that parts (9) protrude beyond the graphite body (3) to engage and cover projections (7) on the object (6).

6. A fixture element (1) according to claims 2-5, **characterized in that** the plate members (2, 2a) and the graphite body (3) are connected by means of connecting elements (4) which extend between the plates (2).

7. A fixture element (1) according to claims 2-6, **characterized in that** the graphite body (3) is provided with a recess (8) which is larger than the connecting element (4) to provide a clearance.

8. A fixture element (1) according to claims 6 and 7, **characterized in that** the plates (2) are provided with a depression (5) to provide a countersink (5) for the connecting element (4).

9. Use of the fixture element (1) defined in claims 2-8, **characterized in that** the fixture element (1) is embedded between elements (6), such as heat exchanger elements, so that the fixture element (1) separates and supports the stacked elements (6) during the high temperature treatment.

## Patentansprüche

1. Verfahren zum Fixieren von Objekten, die vorzugsweise in einer übereinander geschichteten Form in einem Ofen in Vakuum oder Schutzgas Hochtemperaturlöten unterzogen werden sollen, **dadurch gekennzeichnet, dass** ein Fixierelement (1) zwischen den Elementen (6) angeordnet wird, wobei das Fixierelement (1) einen Metallplatten-Mantel (2) umfasst, in den ein Graphitkörper (3) eingebettet ist, wobei der Platten-Mantel (2) aus rostfreiem Stahl mit einem Al-Gehalt von mehr als 2 Gew.-% oder einem Titan-Gehalt von mehr als 0,4 Gew.-% besteht und der Platten-Mantel (2) oxidiert wird, indem er an Luft bei einer Temperatur über 1100 °C erhitzt wird.

2. Fixierelement (1) zum Einsatz in einem Verfahren nach Anspruch 1, **dadurch gekennzeichnet, dass** das Fixierelement einen Metallplatten-Mantel umfasst, in den ein Graphitkörper (3) eingebettet ist, wobei der Platten-Mantel (2) aus rostfreiem Stahl mit einem Al-Gehalt von mehr als 2 Gew.-% oder einem Titan-Gehalt von mehr als 0,4 Gew.-% besteht und der Platten-Mantel (2) durch Erhitzen an Luft bei einer Temperatur von über 1100 °C oxidiert wird.

3. Fixierelement (1) nach Anspruch 2, **dadurch gekennzeichnet, dass** der Platten-Mantel (2) durch zwei Plattenelemente (2) gebildet wird, zwischen denen der Graphitkörper (3) eingebettet ist, so dass der Graphitkörper (3) im Wesentlichen die gleiche Ausdehnung wie die Platten (2) hat.

4. Fixierelement (1) nach Anspruch 3, **dadurch gekennzeichnet, dass** die Plattenelemente (2) durch zwei miteinander verbundene Plattenelemente (2, 2a) gebildet werden.

5. Fixierelement (1) nach den Ansprüchen 3 und 4, **dadurch gekennzeichnet, dass** eines oder beide der Plattenelemente (2, 2a) so ausgeführt sind, dass Teile (9) über den Graphitkörper (3) hinaus vorstehen, um mit Vorsprüngen (7) an dem Objekt (6) in Eingriff zu kommen und sie abzudecken.

6. Fixierelement (1) nach den Ansprüchen 2-5, **dadurch gekennzeichnet, dass** die Plattenelemente (2, 2a) und der Graphitkörper (3) durch Verbindungselemente (4) verbunden sind, die sich zwischen den Platten (2) erstrecken.

7. Fixierelement (1) nach den Ansprüchen 2-6, **dadurch gekennzeichnet, dass** der Graphitkörper (3) mit einer Aussparung (8) versehen ist, die größer ist als das Verbindungselement (4), um einen Zwischenraum zu schaffen.

8. Fixierelement (1) nach den Ansprüchen 6 und 7, **dadurch gekennzeichnet, dass** die Platten (2) mit einer Vertiefung (5) versehen sind, um eine Senkung (5) für das Verbindungselement (4) zu schaffen.

9. Einsatz des Fixierelementes (1) nach den Ansprüchen 2-8, **dadurch gekennzeichnet, dass** das Fixierelement (1) zwischen Elementen (6), wie beispielsweise Wärmetauscherelementen, so eingebettet ist, dass das Fixierelement (1) die übereinander geschichteten Elemente (6) während der Hochtemperaturbehandlung trennt und trägt.

## Revendications

1. Procédé destiné à la fixation d'objets lesquels, de préférence sous la forme d'un empilement, sont destinés à être soudés à chaud dans un four sous vide ou sous atmosphère gazeuse protectrice, **caractérisé en ce qu'**un élément de fixation (1) est disposé entre les éléments (6), ledit élément de fixation (1) comprenant un plateau de métal (2) dans lequel est encastré un corps de graphite (3), où le plateau de métal (2) est fait en un acier inoxydable présentant une teneur en aluminium supérieure à 2% en poids ou une teneur en titane supérieure à 0,4% en poids, ledit plateau (2) étant oxydé par chauffage à l'air à une température supérieure à 1100 degrés centigrades.

2. Elément de fixation (1) destiné à être utilisé dans un procédé selon la revendication 1, **caractérisé en ce que** l'élément de fixation (1) comprend un plateau de métal (2) dans lequel est encastré un corps de graphite (3), où le plateau de métal (2) est fait en un acier inoxydable présentant une teneur en aluminium supérieure à 2% en poids ou une teneur en titane supérieure à 0,4% en poids, ledit plateau (2) étant oxydé par chauffage à l'air à une température supérieure à 1100 degrés centigrades.

3. Elément de fixation (1) selon la revendication 2, **caractérisé en ce que** le plateau (2) est formé par deux éléments de plateau (2) entre lesquels le corps de graphite (3) est intercalé et de telle sorte que le corps de graphite (3) présente essentiellement la même surface que les plateaux (2).

4. Elément de fixation (1) selon la revendication 3, **caractérisé en ce que** les éléments de plateau (2) sont formés par deux éléments de plateau réunis (2, 2a).

5. Elément de fixation (1) selon les revendications 3 et 4, **caractérisé en ce que** l'un ou l'un et l'autre des éléments de plateau (2, 2a) sont configurés de telle sorte que des parties (9) se prolongent au delà du corps de graphite (3) de façon à s'engager avec, et à recouvrir des saillies (7) présentes sur l'objet (6).

6. Elément de fixation (1) selon les revendications 2 à 5, **caractérisé en ce que** les éléments de plateau (2, 2a) et le corps de graphite (3) sont reliés au moyen d'éléments de liaison (4) qui s'étendent entre les plateaux (2).

7. Elément de fixation (1) selon les revendications 2 à 6, **caractérisé en ce que** le corps de graphite (3) présente un évidement (8) de dimension supérieure à celle de l'élément de liaison (4) de façon à donner de l'espace.

8. Elément de fixation (1) selon les revendications 6 et 7, **caractérisé en ce que** les plateaux (2) présentent une dépression (5) destinée à procurer un encastrement (5) pour l'élément de liaison (4).

9. Emploi de l'élément de fixation (1) défini dans les revendications 2 à 8, **caractérisé en ce que** l'élément de fixation (1) est intercalé entre des éléments (6), tels que des éléments échangeurs de chaleur, de telle sorte que l'élément de fixation (1) sépare et supporte les éléments empilés (6) au cours du traitement à haute température.
